# EUROPÄISCHE PATENTSCHRIFT

(11) **EP 0 500 002 B1**
(45) Veröffentlichungstag und Bekanntmachung des Hinweises auf die Patenterteilung: **02.11.1995**
(21) Anmeldenummer: 92102573.0
(22) Anmeldetag: 15.02.1992
(51) Int. Cl.: G02B 7/00

(54) **Laseroptik**
Laser optics
Optique à laser

(30) Priorität: 20.02.1991 CH 523/91
(43) Veröffentlichungstag der Anmeldung: 26.08.1992
(73) Patentinhaber: Gerber, Peter, 8965 Berikon (CH)
(72) Erfinder: Gerber, Peter, 8965 Berikon (CH)
(74) Vertreter: Blum, Rudolf Emil Ernst

(56) Entgegenhaltungen:
- EP-A- 0 397 171
- GB-A- 2 087 591

## Beschreibung

Die Erfindung betrifft eine Laseroptik mit einer Laserdiode und mindestens einer in einem Abstand von der Laserdiode angeordneten und mit dieser axial zusammenwirkenden, eine optische Achse festlegenden Linse, wie aus der Druckschrift GB-A-2 087 591 bekannt ist. Bei Laseroptiken dieser Art müssen die Laserdiode und die Linse bzw. das Linsensystem möglichst exakt axial aufeinander ausgerichtet sein und dies während des Betriebes bleiben. Der Betrieb von Laserdioden kann mit einer grossen Wärmeentwicklung verbunden sein, was sich in Wärmedehnung und entsprechender Masszunahme der Laserdiode und der sie umgebenden Teile, wie z.B. der Linse auswirkt. Ist die Laserdiode fest montiert, besteht damit die Gefahr der Beschädigung oder Strahlversetzung. Ist sie anderseits so gelagert, dass die Wärmedehnungen aufgenommen werden können, kann ihre Ausrichtung auf die optische Achse gestört werden, was eine Nachjustierung erforderlich macht.

Es stellt sich auf dem Hintergrund dieser Problematik die Aufgabe, eine Laseroptik der oben genannten Art so auszugestalten, dass bei einfacher Montage eine ungestörte Ausrichtung der gesamten Optik auf die optische Achse auch nach längerem Betrieb aufrechterhalten bleibt.

Diese Aufgabe wird durch die in den Patentansprüchen genannten Merkmale gelöst.

Durch die Lagerung der Laserdiode und der Linse bzw. des Linsensystems in einer gemeinsamen, geschlitzten Hülse, welche in Radialrichtung elastisch zusammengepresst ist, wird die Ausrichtung dieser Bauteile auch bei Massänderungen aufrecht erhalten. Dabei ist es vorteilhaft, die Hülse in einer zylindrischen Oeffnung eines Halters anzuordnen, welche die optische Achse festlegt und die Pressung der Hülse über elastische Elemente, wie O-Ringe, bewirkt.

Die Montage kann damit sehr einfach durch das Einsetzen der Linse(n) und der Laserdiode in die Hülse und das Einschieben der Hülse in die Halteröffnung erfolgen, ohne dass eine besondere Justierung erforderlich ist. Die achsiale Ausrichtung von Laserdiode und Linse(n) wird während des Betriebes, ungeachtet der Erwärmung oder allfälligen Erschütterungen, aufrecht erhalten.

Weitere Vorteile und Konstruktionsdetails werden nachfolgend anhand der Beschreibung eines in der einzigen Zeichnung dargestellten Ausführungsbeispiels klar.

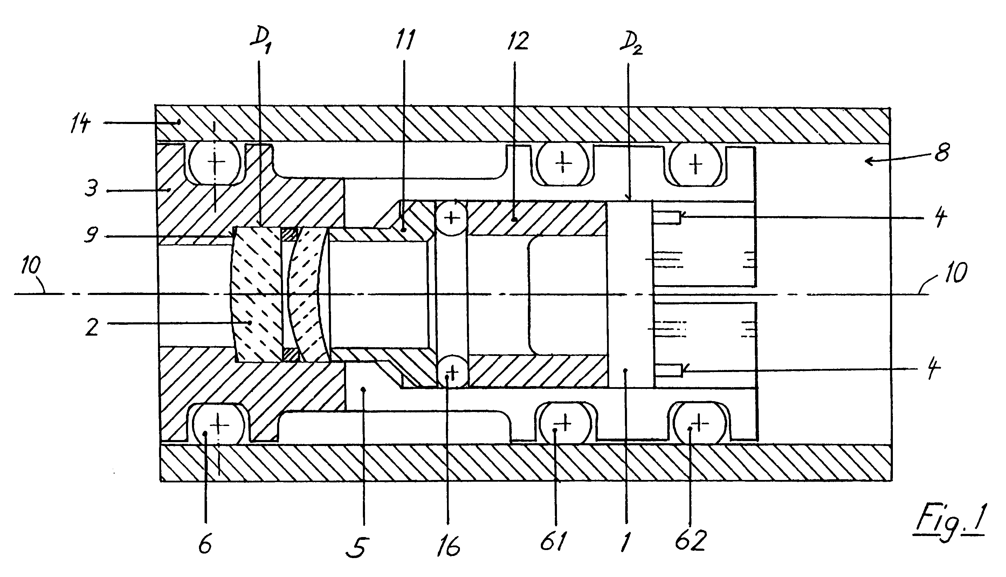

Figur 1 zeigt einen achsialen Schnitt durch eine erfindungsgemäss aufgebaute Laseroptik.

Die optischen Teile bestehen aus einem Linsensystem 2 und einer Laserdiode 1, die auf eine optische Achse 10 ausgerichtet sind. Die Laserdiode 1 und das Linsensystem sind in einer gemeinsamen Hülse 3 angeordnet, welche vorzugsweise als Drehteil ausgebildet ist. Die Hülse ist über einen Teil ihrer Länge, vorzugsweise über 3/4 davon, mit axial verlaufenden Schlitzen 4, 5 versehen und wird dadurch in mehrere, radial zusammenpressbare Backen unterteilt, von denen die Laserdiode 1 bzw. das Linsensystem 2 gehalten und zentriert wird. Dabei ist zwischen einem linsenseitigen und einem laserdiodenseitigen Ende der Hülse 3 zu unterscheiden. Eine erste Schlitzanordnung 4 erstreckt sich vom linsenseitigen Ende der Hülse 3 über einen wesentlichen Teil ihrer Länge. Diese Schlitzanordnung gewährleistet die zentrierte Halterung des Linsensystems 2.

Eine zweite Schlitzanordnung 5 erstreckt sich vom diodenseitigen Ende der Hülse 3 über einen wesentlichen Teil ihrer Länge. Sie stellt die Halterung der Laserdiode 3 sicher. Im gezeigten Beispiel besitzt jede Schlitzanordnung vier über den Hülsenumfang verteilte, zwischen einander 90° einschliessende Schlitze. Die beiden Schlitzanordnungen 4, 5 sind gegeneinander um 45° versetzt. Es ist jedoch auch eine Anordnung mit nur je drei oder mit mehr als vier Schlitzen möglich, wobei sich die Winkelstellung entsprechend ändert. Die so geschlitzte Hülse 3 bildet ein einstückiges Bauteil.

Das Innere der Hülse 3 ist so ausgestaltet, dass das Linsensystem 2 an einer Schulter 9 axial positioniert ist. Das Linsensystem kann zur Montage durch die Hülse 3 eingeschoben werden, bis es an der Schulter 9 ansteht. Daran anschliessend sind Abstandsstücke 11, 12 vorgesehen, über welche die axiale Position der Laserdiode 1 festgelegt wird. Zwischen den Abstandsstücken 11, 12 ist ein elastisches Glied 16 vorgesehen, das im fertig montierten Zustand leicht vorgespannt ist und damit einerseits auf die Laserdiode, andererseits auf das Linsensystem 2 axial einwirkt und diese Teile gegeneinander federnd verspannt.

Das Linsensystem 2 und die Laserdiode 1 sind zwischen den Backen der geschlitzten Hülse 3 radial gehalten und zentriert. Dazu werden die Backen radial nach innen gepresst. Dies wird im vorliegenden Ausführungsbeispiel durch elastische O-Ringe 6, 61, 62 bewerkstelligt, welche um die geschlitzte Hülse herum gelegt sind. Die elastischen O-Ringe können so bemessen sein, dass sie selbst eine radiale Kraft auf die geschlitzte Hülse 3 ausüben. Anderseits oder zusätzlich dazu kann diese radiale Kraft auch durch die Einspannung der mit den O-Ringen versehenen Hülse 3 in einen Halter 14 erzeugt werden, wie in Figur 1 dargestellt. Der Halter 14 besitzt dazu eine kreis-zylindrische Oeffnung 8, in welche die Hülse nach der Montage der optischen Elemente eingeschoben wird.

Die Oeffnung 8 und die Hülse 3 sind so bemessen, dass dazwischen ein radiales Spiel besteht. Die Hülse 3 kann damit in der Oeffnung radial arbeiten. Das Spiel wird durch die O-Ringe 6, 61, 62 aufgenommen, welche zwischen der Hülse 3 und der Oeffnung 8 sitzen. Dabei übt der Halter 14 über die O-Ringe 6, 61, 62 eine radiale Presskraft auf die geschlitzte Hülse 3 aus, die sich über Backen auf das Linsensystem 2 bzw. die Laserdiode 1 überträgt.

Die O-Ringe stellen zugleich eine elektrische Isolation zwischen der Hülse 3 und dem Gehäuse 14 sicher. Dies ist besonders deshalb von Bedeutung, weil das Aeussere der Laserdioden 1 meist mit dem Pluspol der elektrischen Speisung verbunden ist, wogegen das Gehäuse 14 geerdet sein sollte.

Mit Vorteil ist jeweils etwa über dem Durchmesser D₁ des Linsensystems 9 bzw. über dem Durchmesser D₂, an welchem die Laserdiode 1 in der Hülse 3 gehalten ist, ein O-Ring angeordnet. Da die Laserdiode auch axial gegen die Kraft des elastischen Glieds 16 festgeklemmt wird, ist es von Vorteil, dort zwei O-Ringe 61, 62 vorzusehen, um die radiale Presskraft zu erhöhen.

Die kreis-zylindrische Oeffnung 8 stellt so einerseits eine exakte Zentrierung der optischen Achse 10 auf die Achse der Oeffnung sicher und dient zugleich dazu, die radiale Presskraft auf die geschlitzte Hülse 3 aufrecht zu erhalten. Damit kann diese in Radialrichtung arbeiten und die Wärmedehnung der optischen Elemente aufnehmen, ohne dass die Zentrierung verloren geht, und ohne dass sich die Halterung der optischen Elemente lockert bzw. auf diese zu starke Kräfte einwirken.

Dadurch, dass die beschriebene Laseroptik aus Drehteilen aufgebaut ist, die ohne grossen Aufwand präzis herzustellen sind, kann mit relativ geringen Kosten eine exakt zentrierte Halterung erzielt werden, deren Montage äusserst einfach und ohne besondere Justierung erfolgt.

Die Laseroptik kann mit dem Halter 14 in entsprechenden Geräten fixiert werden. Der Halter 14 bildet ein Gehäuse, das die Laseroptik schützend umgibt und den Eintritt von Staub in den Bereich zwischen dem Linsensystem 2 und der Laserdiode 1 verhindert.

## Patentansprüche

1. Laseroptik mit einer Hülse (3), einer Laserdiode (1) und einer von der Laserdiode getrennten Linse (2), wobei die Laserdiode und die Linse in der Hülse so gehalten sind, daß die Linse (2) in einem Abstand von der Laserdiode angeordnet ist und mit dieser optisch zusammenwirkt, und daß die optische Achse im wesentlichen parallel zur Achse der Hülse verläuft, dadurch gekennzeichnet, daß die Hülse im Bereich der Laserdiode und im Bereich der Linse mit axial verlaufenden Schlitzen (4, 5) versehen ist, und daß Mittel (6, 61, 62) zum radialen, elastischen Pressen der Hülse (3) in den Schlitzbereichen vorgesehen sind.

2. Laseroptik nach Anspruch 1, gekennzeichnet durch ein Gehäuse (14) mit einer zylindrischen Oeffnung (8) in der die Hülse (3) mit radialem Spiel angeordnet ist, wobei das radiale Spiel durch mindestens eine zwischen die Hülse (3) und die zylindrische Oeffnung (8) gespannte, elastische Lagerung (6, 61, 62) derart aufgenommen wird, dass die optische Achse auf die Achse der zylindrischen Oeffnung ausgerichtet ist.

3. Laseroptik nach Anspruch 2, dadurch gekennzeichnet, dass die Mittel (6, 61, 62) zum radialen, elastischen Pressen der Hülse (3) durch die zwischen die Hülse und die zylindrische Oeffnung (8) eingespannte, elastische Lagerung gebildet sind.

4. Laseroptik nach Anspruch 2 oder 3, dadurch gekennzeichnet, dass die elastische Lagerung aus einem elektrisch isolierenden Material besteht, wodurch die Hülse (3) vom Gehäuse (14) elektrisch isoliert ist.

5. Laseroptik nach einem der Ansprüche 1 bis 4, dadurch gekennzeichnet, dass die Mittel zum elastischen Pressen der Hülse bzw. die elastische Lagerung durch mindestens einen zwischen der Hülse und der zylindrischen Oeffnung des Gehäuses angeordneten O-Ring (6) gebildet sind.

6. Laseroptik nach Anspruch 5, dadurch gekennzeichnet, dass ein O-Ring (6) etwa über dem Umfang der Linse (2) und ein O-Ring (61) etwa über dem Umfang angeordnet ist, an welchem die Laserdiode (1) in der Hülse (3) gehalten ist.

7. Laseroptik nach Anspruch 5, dadurch gekennzeichnet, dass ein O-Ring (6) etwa über dem Umfang der Linse (2) und je ein O-Ring (61, 62) links und rechts von der Lage angeordnet sind, an welchem die Laserdiode (1) in der Hülse (3) gehalten ist.

8. Laseroptik nach einem der vorangehenden Ansprüche, dadurch gekennzeichnet, dass sich mindestens drei axial und symmetrisch angeordnete Schlitze (4) von einem linsenseitigen Ende und mindestens drei axial und symmetrisch angeordnete Schlitze (5) von einem laserdiodenseitigen Ende jeweils über einen wesentlichen Teil der Länge der Hülse (3) erstrecken.

9. Laseroptik nach Anspruch 8, dadurch gekennzeichnet, dass sich die Schlitze (4) jeweils mindestens über Dreiviertel der Hülsenlänge erstrecken.

10. Laseroptik nach einem der vorangehenden Ansprüche, dadurch gekennzeichnet, dass die Hülse (3) eine Schulter (9) zur axialen Abstützung der Linse (2) besitzt.

11. Laseroptik nach einem der vorangehenden Ansprüche, dadurch gekennzeichnet, dass zwischen der Laserdiode (1) und der Linse (2) ein elastisches Glied (16) vorgesehen ist, das einerseits auf die Laserdiode (1) und andererseits auf die Linse (2) wirkt.

## Claims

1. Laser optics with a sleeve (3), a laser diode (1) and a lens (2) separated from the laser diode, wherein the laser diode and the lens are held in the sleeve such that the lens (2) is arranged at a distance from the laser diode and co-operates with same optically, and that the optical axis is running substantially parallel to the axis of the sleeve, characterised in that in the region of the laser diode and in the region of the lens the sleeve is provided with axially extending slits (4, 5), and that means (6, 61, 62) are provided for radially, elastically compressing the sleeve (3) in the slitted regions.

2. Laser optics of claim 1, characterised by a housing (14) with a cylindrical opening (8), in which the sleeve (3) is arranged with radial clearance, wherein the radial clearance is sustained by at least one elastic bearing (6, 61, 62) clamped between the sleeve (3) and the cylindrical opening (8) such that the optical axis is aligned with the axis of the cylindrical opening.

3. Laser optics of claim 2 characterised in that the means (6, 61, 62) for radially, elastically compressing the sleeve (3) are formed by the elastic bearing clamped between the sleeve and the cylindrical opening (8).

4. Laser optics of claim 2 or 3 characterised in that the elastic bearing consists of an electrically insulating material, whereby the sleeve (3) is electrically isolated from the housing (14).

5. Laser optics of one of the claims 1 to 4 characterised in that the means for elastically compressing the sleeve or the elastic bearing, respectively, are formed by at least one O-ring (6) arranged between the sleeve and the cylindrical opening of the housing.

6. Laser optics of claim 5 characterised in that one O-ring (6) is arranged approximately at the circumference of the lens (2) and one O-ring (61) approximately at the circumference where the laser diode (1) is held in the sleeve (3).

7. Laser optics of claim 5 characterised in that one O-ring (6) is arranged approximately at the circumference of the lens (2), and one O-ring (61, 62) to the left and one O-ring (61, 62) to the right of the position where the laser diode (1) is held in the sleeve (3).

8. Laser optics of one of the preceding claims characterised in that at least three slits (4) arranged axially and symmetric extend from a lens side end and at least three slits (5) arranged axially and symmetric extend from a laser diode side end each over a substantial part of the length of the sleeve (3).

9. Laser optics of claim 8 characterised in that each of the slits (4) extends over at least three fourth of the length of the sleeve.

10. Laser optics of one of the preceding claims characterised in that the sleeve (3) comprises a shoulder (9) for axially supporting the lens (2).

11. Laser optics of one of the preceding claims characterised in that an elastic member (16) is provided between the laser diode (1) and the lens (2), which acts on the one hand onto the laser diode (1) and on the other hand onto the lens (2).

## Revendications

1. Optique à laser avec une douille (3), une diode laser (1) et une lentille (2) distincte de cette diode, celle-ci et la lentille étant maintenues dans la douille de façon à ce que la lentille (2) soit disposée à distance de la diode laser et coopère optiquement avec elle, l'axe optique étant essentiellement parallèle à l'axe de la douille, caractérisée en ce que la douille comporte des fentes axiales (4, 5) au voisinage de la diode laser et à celui de la lentille, et que des moyens (6, 61, 62) sont prévus pour comprimer la douille (3) dans la région des fentes.

2. Optique à laser selon la revendication 1, caractérisée par un boîtier (14) comportant une ouverture cylindrique (8) dans laquelle la douille (3) est agencée avec un jeu radial, ce jeu étant rattrapé par au moins un palier élastique (6, 61, 62) enserré entre la douille (3) et l'ouverture cylindrique (8) de manière à centrer l'axe optique avec l'axe de l'ouverture cylindrique.

3. Optique à laser selon la revendication 2, caractérisée en ce que les moyens (6, 61, 62) pour la compression radiale de la douille (3) sont formés par le palier élastique enserré entre la douille et l'ouverture cylindrique (8).

4. Optique à laser selon une des revendications 2 ou 3, caractérisée en ce que le palier élastique consiste en un matériau électriquement isolant de façon à isoler électriquement la douille (3) du boîtier (14).

5. Optique à laser selon une des revendications 1 à 4, caractérisée en ce que les moyens pour la compression élastique de la douille, respectivement le palier élastique, sont formés par au moins un joint d'étanchéité toroïdal (6) disposé entre la douille et l'ouverture cylindrique du boîtier.

6. Optique à laser selon la revendication 5, caractérisée en ce qu'un joint d'étanchéité toroïdal (6) est disposé sensiblement à l'aplomb de la circonférence de la lentille (2) et un joint d'étanchéité toroïdal (61) sensiblement à l'aplomb de la circonférence le long de laquelle la diode laser (1) est maintenue dans la douille (3).

7. Optique à laser selon la revendication 5, caractérisée en ce qu'un joint d'étanchéité toroïdal (6) est disposé sensiblement à l'aplomb de la circonférence de la lentille (2) et que deux joints d'étanchéité toroïdaux (61, 62) sont disposés de part et d'autre de l'emplacement où la diode laser (1) est supportée dans la douille (3).

8. Optique à laser selon une des revendications précédentes, caractérisée en ce qu'au moins trois fentes axiales (4) disposées symétriquement et débutant à une extrémité dirigée vers la lentille ainsi qu'au moins trois fentes axiales (5) disposées symétriquement et débutant à une extrémité dirigée vers la diode laser s'étendent sur une partie importante de la longueur de la douille (3).

9. Optique à laser selon la revendication 8, caractérisée en ce que chaque fente (4) s'étend au moins sur trois quarts de la longueur de la douille.

10. Optique à laser selon une des revendications précédentes, caractérisée en ce que la douille (3) présente un rebord (9) servant de butée pour la lentille (2).

11. Optique à laser selon une des revendications précédentes, caractérisée en ce qu'un organe élastique (16) agissant d'une part sur la diode laser (1) et d'autre part sur la lentille (2) est prévu entre la diode laser (1) et la lentille (2).
